(19) <img> Europäisches Patentamt
European Patent Office
Office européen des brevets

(11) **EP 4 235 487 A1**

(12) **EUROPEAN PATENT APPLICATION**

(43) Date of publication:
**30.08.2023 Bulletin 2023/35**

(21) Application number: **22199081.5**

(22) Date of filing: **30.09.2022**

(51) International Patent Classification (IPC):
**G06F 40/247** (2020.01)     **G06F 40/30** (2020.01)
**G06N 3/00** (2023.01)

(52) Cooperative Patent Classification (CPC):
**G06F 40/30; G06F 40/247; G06N 3/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.02.2022 US 202217678836**

(71) Applicant: **Fujitsu Limited**
**Kawasaki-shi, Kanagawa 211-8588 (JP)**

(72) Inventors:
• **BAHRAMI, Mehdi**
**San Jose, California, 95134 (US)**
• **CHEN, Wei-Peng**
**Fremont, California, 94539 (US)**

(74) Representative: **Hoffmann Eitle**
**Patent- und Rechtsanwälte PartmbB**
**Arabellastraße 30**
**81925 München (DE)**

(54) **SEMANTIC BASED ORDINAL SORTING**

(57)    Operations may include obtaining a dataset that includes a plurality of unique values and obtaining a plurality of permutations with respect to the plurality of unique values. Additionally, the operations may include, for each respective permutation, obtaining a respective overall permutation probability for the respective permutation based on masked value probabilities determined by a masked language model (MLM). Each masked value probability may be determined with respect to a respective masked version of a plurality of masked versions of the respective permutation. The operations may also include selecting a particular permutation from the plurality of permutations based on a comparison between the respective overall permutation probabilities of the plurality of permutations. In addition, the operations may include determining a semantic order of the unique values of the plurality of unique values based on the particular permutation in which the semantic order is related to respective meanings of the unique values.

FIG. 1

**Description**

The present disclosure generally relates to semantic based ordinal sorting.

**BACKGROUND**

Computing systems may be configured to process data found in datasets. In some instances, the computing systems may be configured to sort the data based on its respective values (e.g., numerical values, alphabetically, etc.). Such sorting may help facilitate further processing of the data, such as sorting the data in a specific manner as part of training machine learning models.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

**SUMMARY**

According to an aspect of an embodiment, operations may include obtaining a dataset that includes a plurality of unique values and obtaining a plurality of permutations with respect to the plurality of unique values, each permutation including a unique sequence of two or more of the unique values. Additionally, the operations may include, for each respective permutation of the plurality of permutations, obtaining a respective overall permutation probability for the respective permutation based on a plurality of masked value probabilities determined by a masked language model (MLM). Each masked value probability may be determined with respect to a respective masked version of a plurality of masked versions of the respective permutation. The operations may also include selecting a particular permutation from the plurality of permutations based on a comparison between the respective overall permutation probabilities of the plurality of permutations. In addition, the operations may include determining a semantic order of the unique values of the plurality of unique values based on the particular permutation in which the semantic order is related to respective meanings of the unique values.

**BRIEF DESCRIPTION OF THE DRAWINGS**

Example embodiments will be described and explained with additional specificity and detail through the accompanying drawings in which:

Figure 1 is a diagram representing an example system configured to determine a semantic order of data, according to one or more embodiments of the present disclosure;
Figure 2 is a flowchart of an example method of obtaining a set of unique values, according to one or more embodiments of the present disclosure;
Figure 3 is a flowchart of an example method of determining a semantic order of a set of unique values, according to one or more embodiments of the present disclosure;
Figure 4A is a flowchart of another example method of determining a semantic order of a set of unique values, according to one or more embodiments of the present disclosure;
Figure 4B illustrates an example associated with the method of Figure 4A;
Figure 5 is a flowchart of another example method of determining a semantic order of a set of unique values, according to one or more embodiments of the present disclosure; and
Figure 6 is an example computing system, according to one or more embodiments of the present disclosure.

**DETAILED DESCRIPTION**

Data may have a natural order to it that may be useful in analyzing and/or processing the data. For example, it may be beneficial to organize numerical data according to the numeric values (e.g., from lowest to highest or vice versa). As another example, it may be beneficial to organize words alphabetically. Many computing systems are configured to sort data in such a manner.

However, in some instances, data may have a certain semantic order to it based on the meaning of the data. For example, certain terms may be ordered in a certain manner based on the meanings of the terms. For instance, the names of the months of the year or the days of the week may follow a certain order that is not alphabetical or numerical but instead that is semantic. As another example, educational degrees may have a certain order associated with them based on how advanced the degree is, which is often conveyed through the words used to describe such degrees. For instance, degrees may be commonly ordered as follows: high school diploma, associate's degree, bachelor's degree, master's degree, doctorate degree, etc.

As compared to sorting data numerically or alphabetically, computing systems typically have much more difficulty sorting data based on semantic meaning. As such, data with certain semantic orders is often manually encoded with corresponding ordinal values in a supervised manner rather than unsupervised by computing systems.

According to one or more embodiments of the present disclosure, a computing system may be configured to determine a semantic order of values included in data in an unsupervised manner. Additionally or alternatively, the computing system may be configured to determine ordinal values for the values based on the determined semantic order. In these or other embodiments, the computing system may be configured to encode the data with the ordinal values and sort the data based on the encoded ordinal values. As discussed in detail below, the operations described in the present disclosure may accordingly improve the operations of the computing system by configuring the computing system to independently sort data based on the semantic meaning of the data in an unsupervised manner that may reduce or eliminate obtaining corresponding input from a human operator.

Further, in some instances, machine learning models may order and sort data as part of analyzing the data and determining predictions for the data. In some embodiments, one or more machine learning models may be configured to perform the semantic ordering operations described in the present disclosure, which in some instances may also improve the performance of the machine learning as compared to instances in which other sorting techniques (e.g., alphabetical, numerical, etc.) may be employed.

Embodiments of the present disclosure are explained with reference to the accompanying figures.

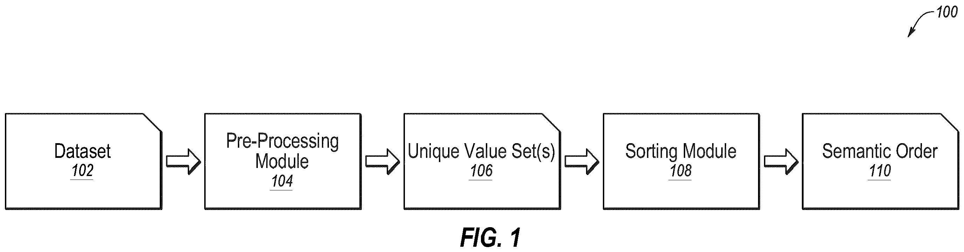

Figure 1 is a diagram representing an example system 100 configured to determine a semantic order of data, according to one or more embodiments of the present disclosure. In some embodiments, the system 100 may include a pre-processing module 104 and a sorting module 108.

Each of the pre-processing module 104 and the sorting module 108 (generally referred to as "computing modules") may include code and routines configured to enable a computing system to perform one or more operations. Additionally or alternatively, the computing modules may be implemented using hardware including a processor, a microprocessor (e.g., to perform or control performance of one or more operations), a field-programmable gate array (FPGA), or an application-specific integrated circuit (ASIC). In some other instances, the computing modules may be implemented using a combination of hardware and software. In the present disclosure, operations described as being performed by a respective computing module may include operations that the respective computing module may direct a corresponding system to perform. Further, although the pre-processing module 104 and the sorting module 108 are described separately, such separation may be a logical separation to help facilitate different operations that may be performed by the system 100. As such, the particular implementation of the computing modules may be such that they are integrated into the same module or distributed in a different manner than illustrated or explained.

The pre-processing module 104 may be configured to perform one or more operations on a dataset 102 to obtain one or more sets of unique values ("unique value sets106") that may be included in the dataset 102. For example, in some embodiments, the dataset 102 may include one or more different categories of data in which each category may have one or more unique values that may correspond to the category. In these or other embodiments, the unique values of the one or more of the categories may have an order to them that may be based on the meanings of the unique values (referred to in the present disclosure as a "semantic order"). For example, a category may be a month and the corresponding unique values may be the names of the different months of the year. As another example, a category may be days of the week and the corresponding unique values may be the names of the different days of the week. As another example, a category may be a quality ranking and the corresponding unique values may be different quality indicators (e.g., very good, good, average, poor, very poor, etc.). As another example, a category may be education level and the corresponding unique values may be different types of educational degrees (e.g., high school diploma, associate's degree, bachelor's degree, master's degree, doctorate degree, etc.).

In these or other embodiments, the dataset 102 may be organized in tabular form that may include one or more rows and/or one or more columns. Additionally or alternatively, the tabular form may be such that each row or each column may correspond to a different category of data.

In some embodiments, the pre-processing module 104 may be configured to identify the different categories of data included in the dataset 102. For example, the pre-processing module 104 may be configured to parse column or row headings to identify different data categories. In these or other embodiments, the pre-processing module 104 may be configured to parse the individual data fields of a corresponding data category to identify the different values that may be included in such fields. In some embodiments, the pre-processing module 104 may be configured to identify data that may have a semantic order to it. As such, in some embodiments, the pre-processing module 104 may be configured to determine whether the identified values include alphabetic text (e.g., are strings or may be converted into strings). In these or other embodiments, in instances in which the text may be converted into strings, the pre-processing module 104 may be configured to perform such conversion.

In these or other embodiments, the pre-processing module 104 may be configured to identify the unique values that correspond to an identified category of data. For example, the pre-processing module 104 may be configured to extract all of the data values that correspond to a particular category. The pre-processing module 104 may additionally be configured to analyze the extracted values to identify which values are different from any of the other values, which may be identified as corresponding unique values of the particular category. Stated another way, the unique values may include the different possible values that may be entered for the data of the particular category.

In these or other embodiments, the pre-processing module 104 may be configured to arrange the unique values into one or more unique value sets 106. Each unique value set 106 may include the respective unique values that correspond to a respective data category. In these or other embodiments, the unique value sets 106 may include an indication as to which respective data categories the respective unique value sets 106 corresponds.

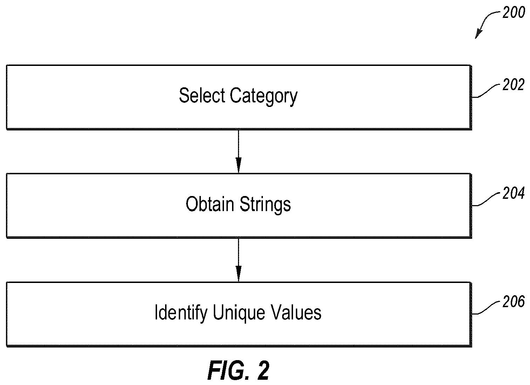

The sorting module 108 may be configured to identify respective semantic orders of the unique values include in each of one or more of the unique value sets 106. In these or other embodiments, the sorting module 108 may be configured to output the identified semantic orders as semantic orders 110. In some embodiments, the sorting module 108 may be configured to determine the semantic orders 110 in an unsupervised manner using one or more operations described in detail below with respect to FIGS. 2-5. In these or other embodiments, the semantic orders 110 may include ordinal values that may be respectively assigned to each unique value of a corresponding unique value set 106. The ordinal values may be numbers that indicate respective positions of corresponding unique values with respect to the semantic order of the respective unique values of the corresponding unique value set 106.

Additionally or alternatively, in some embodiments, the sorting module 108 may be configured to process the dataset 102 based on the determined semantic orders 110. For example, in some embodiments, the sorting module 108 may be configured to encode the dataset 102 with the ordinal values assigned to the unique values. For instance, a particular ordinal value that corresponds to a particular unique value may be added to the dataset 102 and associated with every instance of the particular unique value included in the dataset 102. In these or other embodiments, the sorting module 108 may be configured to organize data of the dataset 102 according to the encoded ordinal values associated with one or more categories of data of the dataset 102. For example, the sorting module 108 may sort unique values according to the numerical order of the ordinal values assigned thereto. The organizing and ordering of the data of the dataset 102 may accordingly be based on the semantic order of the underlying data of the category by which the data may be organized. Additionally, the ordering based on the semantic order may be performed in an unsupervised approach. Additionally or alternatively, the organized data may be provided to a machine learning model such that the machine learning model may be trained according to the ordering.

Modifications, additions, or omissions may be made to the system 100 without departing from the scope of the disclosure. For example, the designations of different elements in the manner described is meant to help explain concepts described herein and is not limiting. Further, the system 100 may include any number of other elements or may be implemented within other systems or contexts than those described.

Figure 2 is a flowchart of an example method 200 of obtaining a set of unique values, according to one or more embodiments of the present disclosure. In some embodiments, the pre-processing module 104 of Figure 1 may perform one or more operations associated with the method 200. Although illustrated with discrete blocks, the steps and operations associated with one or more of the blocks of the method 200 may be divided into additional blocks, combined into fewer blocks, or eliminated, depending on the particular implementation.

The method 200 may include a block 202 at which a data category may be selected. The selected data category may be identified such as described above with respect to Figure 1 regarding the identifying of data categories in the dataset 102. Additionally or alternatively, in some embodiments, the data category may be selected in response to values corresponding to the data category having alphabetic text.

At block 204, strings of data associated with data fields that correspond to the selected category may be obtained. In some embodiments, the data included in the corresponding data fields may already be formatted as strings. Additionally or alternatively, the data may be converted into strings, such as described above.

At block 206, unique values that are associated with the selected category may be identified. For example, the strings obtained from each of the data fields may be analyzed to identify which strings are unique, such as described above with respect to Figure 1. The unique values identified at block 206 may be used as a set of unique values that correspond to the category selected at block 202.

Modifications, additions, or omissions may be made to the method 200 without departing from the scope of the disclosure. For example, order of operations may differ. Additionally or alternatively, the method 200 may include more or fewer operations than those described.

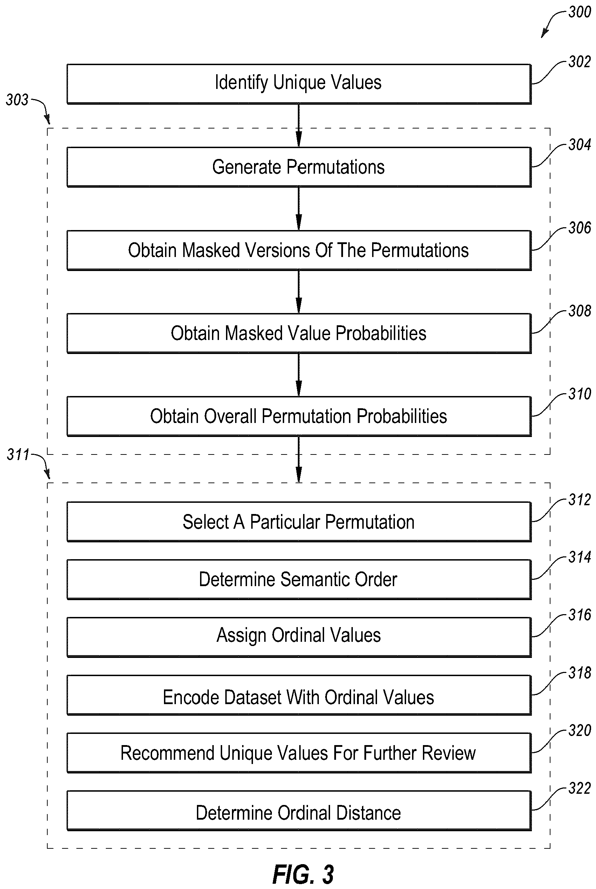

Figure 3 is a flowchart of an example method 300 of determining a semantic order of a set of unique values, according to one or more embodiments of the present disclosure. In some embodiments, the pre-processing module 104 and/or the sorting module 108 of Figure 1 may perform one or more operations associated with the method 300. Although illustrated with discrete blocks, the steps and operations associated with one or more of the blocks of the method 300 may be divided into additional blocks, combined into fewer blocks, or eliminated, depending on the particular implementation.

At block 302, a set of unique values may be obtained. The set of unique values may be obtained as an input in some embodiments. Additionally or alternatively, the set of unique values may be obtained using one or more operations of the method 200 of Figure 2.

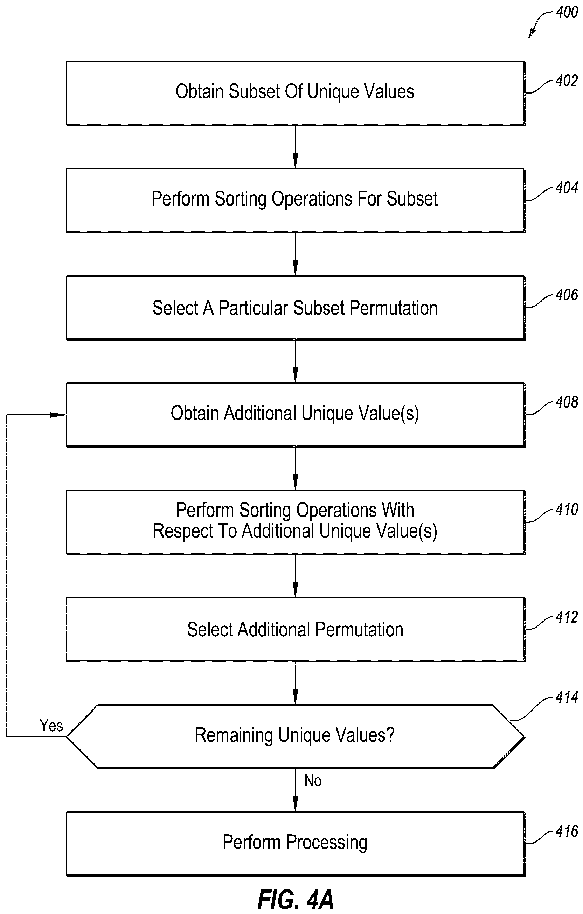

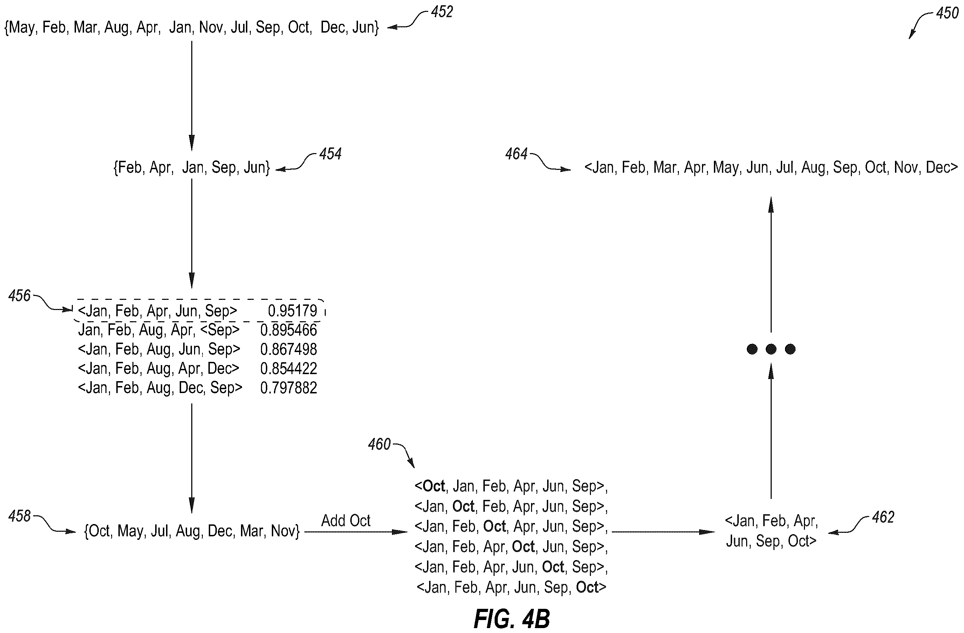

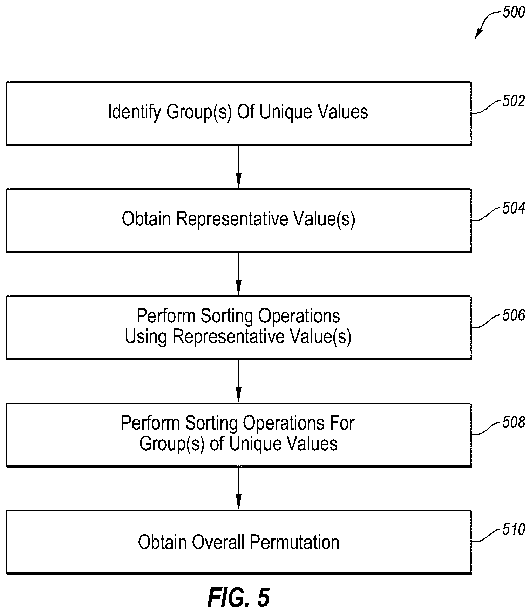

The method 300 may include a set of sorting operations 303 in some embodiments. The sorting operations 303 may include a block 304, at which a set of permutations of the unique values of the set of unique values may be generated. In some embodiments, each permutation of the set of permutations may include every unique value of the set of unique values. Additionally or alternatively, one or more of the permutations may include only a subset of the unique values and accordingly may not include one or more unique values. More detail is given below with respect to Figures 4 and 5 regarding any modifications that may be performed in instances in which the permutations include only a subset of the unique values. Additionally or alternatively, each permutation may include only one instance of a respective unique value such that unique values may not be repeated in any of the permutations. In these or other embodiments, the set of generated permutations may include every possible permutation.

By way of example, the unique values that may be used to generate the permutations may be "Jan", "Feb", and "Mar". As such, the set of generated permutations may be indicated by Table 1 below.

Table 1

| 1st Permutation | Jan | Feb | Mar |
| --- | --- | --- | --- |
| 2nd Permutation | Mar | Jan | Feb |
| 3rd Permutation | Jan | Mar | Feb |
| 4th Permutation | Mar | Feb | Jan |
| 5th Permutation | Feb | Mar | Jan |
| 6th Permutation | Feb | Jan | Mar |

At block 306, masked versions of each of the permutations may be generated. Each masked version of a respective permutation may mask a different unique value of the respective permutation. Reference to "masking" a unique value may include any appropriate technique that may remove or hide the unique value from the corresponding permutation. Table 2 below illustrates example masked versions of the first permutation of Table 1.

Table 2

| 1st Masked Version | <Mask> | Feb | Mar |
| --- | --- | --- | --- |
| 2nd Masked Version | Jan | <Mask> | Mar |
| 3rd Masked Version | Jan | Feb | <Mask> |

Similar masked versions may be respectively generated for the second through sixth permutations of Table 1.

At block 308, respective masked value probabilities may be obtained for each respective masked version of each respective permutation. For example, each masked version may be sent to a masked language model (MLM) system, such as a BERT model system. In general, the MLM system may be configured to receive a sequence of words with one or more of the words masked and may determine one or more words that may be possible candidates for the masked words. Additionally or alternatively, the MLM system may be configured to determine and provide a respective probability with respect to each candidate word that indicates the probability that the corresponding candidate word would be the masked word.

Accordingly, in some embodiments, with respect to a particular masked version, the MLM system may be configured to determine one or more candidate words that may be the particular masked word of the particular masked version. Further, the MLM system may be configured to determine respective probabilities with respect to each of the candidate words for the particular masked word of the particular masked version. In these or other embodiments, the set of determined candidates and their corresponding probabilities may be obtained. The set of determined candidates likely will include the particular masked word, which may be previously known by the system performing the operations of block 308. The system may accordingly identify the particular masked word from the candidates and obtain the corresponding probability that is determined for the particular masked word.

For example, the first masked version of Table 2 may be provided to the MLM system in which "Jan" may be masked. The MLM system may accordingly output a set of candidate words that may be the masked word in which "Jan" may be one of the candidate words. "Jan" may also have a probability associated therewith indicating how likely it is that "Jan" is the masked word.

The probability of a respective masked word with respect to a respective masked version of a respective permutation may be the masked value probability of the respective masked version. For example, a probability associated with "Jan" that may be output with respect to the first masked version of Table 2 may be used as the masked value probability of the first masked version. Masked value probabilities may be similarly obtained with respect to "Feb" and the second masked version of Table 2 and with respect to "Mar" and the third masked version of Table 3. Further, masked value probabilities may also be similarly obtained for each masked version of each of the second through sixth permutations of Table 1.

At block 310, overall permutation probabilities with respect to the permutations may be obtained. Each permutation probability may indicate an overall probability that the sequence of the corresponding permutation is the semantic order of the unique values included in the corresponding permutation. In some embodiments, the respective overall permutation probabilities for the respective permutations may be based on the masked value probabilities associated with the different versions of the respective permutations. For example, referring again to Tables 1 and 2, an overall permutation probability of the first permutation of Table 1 may be based on the masked value probabilities of the masked versions of the first permutation that are indicated in Table 2. The overall permutation probabilities of the other permutations of Table 1 may be similarly based on the masked value probabilities of their respective masked versions.

In some embodiments, the respective overall permutation probabilities may be determined by aggregating the corresponding masked value probabilities in any suitable manner. For example, the corresponding masked value probabilities may be summed or averaged to obtain the respective overall permutation probabilities.

In some embodiments, the method 300 may include a processing block 311 that may include one or more blocks related to one or more processing operations that may be performed based on the determined overall permutation probabilities.

For example, in some embodiments, the processing block 311 may include a block 312. At block 312, a particular permutation of the permutations generated at block 304 may be selected. The particular permutation may be selected based on a comparison between the respective overall permutation probabilities of the permutations. For example, permutation with the highest overall permutation probability (e.g., highest total averaged value of corresponding masked value probabilities) may represent the most likely semantic order of the unique values included in the permutations. As such, in some embodiments, the comparing may include sorting the permutations based on their respective overall permutation probabilities and selecting the permutation with the highest overall permutation probability.

Additionally or alternatively, the processing block 311 may include a block 314. At block 314, a semantic order of the unique value set obtained at block 302 may be determined. As indicated above, the order of the unique values in the selected permutation may indicate the semantic order of the unique value set. Therefore, the semantic order may be determined according to order of the unique values as included in the selected permutation.

In these or other embodiments, the processing block 311 may include a block 316, at which ordinal values may be assigned to the unique values, such as described above with respect to Figure 1. In these or other embodiments, the processing block 311 may include a block 318, at which the dataset may be encoded with the ordinal values, such as also described above with respect to Figure 1. In these or other embodiments, the data (e.g., one or more sets of unique values and one or more other categories that may be associated with a respective set of unique values) may be ordered (e.g., sorted) according to the ordinal values assigned to the unique values, which may accordingly allow for ordering the data based on the semantic meanings and corresponding semantic order of one or more sets of unique values.

Additionally or alternatively, the processing block 311 may include a block 320 in some embodiments. At block 320, the set of unique values may be recommended for further review (e.g., by a human for supervised review). The recommendation may be based on the overall permutation probabilities. For example, in some instances, a comparison between overall permutation probabilities may indicate that multiple overall permutation probabilities (e.g., the top 3 overall permutation probabilities) may be very similar to each other (e.g., as indicated as being within a certain threshold of each other). In these or other embodiments, the differences between the very similar overall permutation probabilities may be a position of a same particular unique value. The close similarity between the different overall permutation probabilities may be due to the particular unique value not having a meaning that is consistent with a semantic ordering of the other unique values. As such, in some instances, the set of unique values and/or the particular unique value may be flagged as possibly needing supervised review. In these or other embodiments, the flagging may trigger the generation of the recommendation for further review.

By way of example, the unique value set may include educational degrees but may also include the term "graduation", which may not fit well into a semantic ordering associated with the other unique values. As such, permutations in which the order of the other unique values follows the semantic order of those unique values but in which the position of the term "graduation" changes may have similar to identical overall permutation probabilities. Accordingly, based on such a scenario, the educational degree unique value set and/or the term "graduation" may be flagged and/or recommended for further review.

Additionally or alternatively, the processing block may include a block 322 in some embodiments. At block 322, further processing may be performed to help differentiate between different overall permutation probabilities. For example, in some instances that do not include aberrant unique values (e.g., such as described with respect to block 320), one or more of the overall permutation probabilities may still be similar to the same (e.g., as indicated by being within a particular threshold of each other). In these or other embodiments, an ordinal distance determination may be made at block 322 to determine which permutation may be more accurate. For example, a first month permutation of "<Feb, Jan, Mar, Apr>" and a second month permutation of "<Mar, Feb, Jan, Apr>" may have a same or similar overall permutation probability. However, the first month permutation may have a closer "ordinal distance" from the actual semantic order than the second month permutation given that "Mar" is further from its proper position in the second month permutation than "Feb" is from its proper position in the first month permutation.

In some embodiments, the ordinal distance determination for a respective permutation may be based on the following expression:

$$Ord_{Acc} = \sum_{i=1}^{\|A\|} \frac{|\mathcal{L}_i - \widehat{\mathcal{L}_i}|}{\|A\|}$$

In the above expression, *"Ord_{Acc}"* may represent the ordinal distance determination, *"A"* may represent the length of the permutations, *"L_i"* represents the actual semantic order position of a corresponding unique value and "$\widehat{L_i}$" represents the position of the corresponding unique value in the respective permutation. In the example above regarding the first month permutation and the second month permutation, applying the above expression to each of the first month permutation and the second month permutation may indicate a lower ordinal distance for the first month permutation than the second month permutation, which may indicate that the first month permutation is more accurate than the second month permutation.

Modifications, additions, or omissions may be made to the method 300 without departing from the scope of the disclosure. For example, order of operations may differ. Additionally or alternatively, the method 300 may include more or fewer operations than those described.

Figure 4 is a flowchart of an example method 400 of determining a semantic order of a set of unique values, according to one or more embodiments of the present disclosure. In some embodiments, the pre-processing module 104 and/or the sorting module 108 of Figure 1 may perform one or more operations associated with the method 400. Although illustrated with discrete blocks, the steps and operations associated with one or more of the blocks of the method 400 may be divided into additional blocks, combined into fewer blocks, or eliminated, depending on the particular implementation.

In general, the method 400 may relate to instances in which the number of unique values in a set of unique values exceeds a threshold number. The threshold number may be based on processing capabilities of a computing system configured to determine the semantic order. For example, as indicated above with respect to Figure 3, as the number of unique values in a set of unique values increases, the number of permutations may increase at an increasingly larger degree. For instance, the number of different permutations may be a factorial with respect to the number of unique values (e.g., the number of permutations for "x" number of unique values may be "x!"). Therefore, the amount of processing that may be performed may get increasingly larger and may tax the corresponding computing system. The threshold number may accordingly be based on the computing capabilities of the underlying computing system.

The method 400 may include a block 402, at which a subset of a set of unique values may be obtained. The subset of unique values may be based on the threshold number. For example, the number of values may be equal to the threshold number. In these or other embodiments, the unique values that are selected for the subset of unique values may be selected based on no particular criteria (e.g., randomly).

By way of example, Figure 4B illustrates an example 450 in which a set of unique values 452 ("set 452") may be the months of the year and the threshold number may be "5". Therefore, five of the twelve months names may be randomly selected. For example, a subset 454 that includes the months "Feb", "Apr", "Jan", "Sep" and "Jun" may be selected.

Returning to Figure 4A, at block 404, sorting operations may be performed for the selected subset of unique values. For example, the sorting operations 303 described with respect to the method 300 may be performed with respect to the subset of unique values. The sorting operations may be used to obtain overall permutation probabilities for the different permutations of the subset of unique values. For example, returning to the example 450 of Figure 4B, overall permutation probabilities may be determined for each of the different possible permutations of the subset 454.

Returning to Figure 4A, at block 406, a particular permutation of the subset of unique values ("particular subset permutation") may be selected. In some embodiments, the particular subset permutation may be selected in response to having the highest overall permutation probability as compared to the overall permutation probabilities of the other subset permutations. For example, returning to the example 450 of Figure 4B, a subset permutation 456 ordered as follows: "<Jan, Feb, Apr, Jun, Sep>" may be selected as the particular subset permutation in response to having a higher overall permutation probability than other permutations of the subset 454.

Returning to Figure 4A, at block 408 one or more additional unique values may be selected from the remaining unique values of the set of unique values. The number of additional unique values may be based on the computing capabilities of the underlying computing system in some embodiments. Returning to the example 450 of Figure 4B, "Oct" may be selected from a remaining subset 458 of unique values ("{Oct, May, Jul, Aug, Dec, Mar, Nov}").

Returning to Figure 4A, at block 410, sorting operations may be performed with respect to the additional unique value(s) obtained at block 408 and the previously selected subset permutation. For example, multiple additional permutations may be obtained by adding the additional unique value to different positions in the previously selected subset permutation.

In these or other embodiments, the additional unique value may be masked in each of the additional permutations and each masked additional permutation may be provided to an MLM system. An additional permutation probability may be obtained from the MLM for each respective masked additional permutation. Further, each additional permutation probability may indicate a probability associated with the semantic position of the additional unique value corresponding to the position of the additional unique value in the corresponding additional permutation.

For instance, returning to the example 450 of Figure 4B, a set 460 of additional permutations may be obtained by adding "Oct" to the permutation 456 in which the position of "Oct" differs in each additional permutation of the set 460. In these or other embodiments, "Oct" may be masked in each of the additional permutations of the set 460 to obtain corresponding masked additional permutations. The masked additional permutations may be sent to an MLM system, which may return respective additional permutation probabilities for the respective masked additional permutations.

Returning to Figure 4A, at block 412 a particular additional permutation may be selected. In some embodiments, the particular additional permutation may be selected in response to having the highest additional permutation probability as compared to the permutation probabilities of the other subset permutations. For example, returning to the example 450, an additional permutation 462 may be selected from the set 460 of additional permutations based on the additional permutation 462 having the highest additional permutation probability as compared to the other additional permutations of the set 460.

Returning to Figure 4A, following block 412, the method 400 may proceed to block 414 at which it may be determined whether any more unique values from the set of unique values may be remaining to be added to the previously selected additional permutation. For example, it may be determined whether the previously selected additional permutation includes all of the unique values of the set of unique values. In response to one or more unique values remaining (e.g., the previously selected additional permutation not including all of the unique values), the method 400 may return to block 408 at which one or more remaining unique values may be added to the additional permutation selected at block 412. The operations 408, 410, 412, and 414 may repeat until no more unique values remain and a final permutation is obtained and selected.

For example, returning to the example 450 of Figure 4B, following the selection of the additional permutation 462, the operations of blocks 408, 410, 412, and 414 may be iteratively repeated with respect to the remaining subset of unique values "{May, Jul, Aug, Dec, Mar, Nov}" until there are no more remaining months and a final permutation 464 is obtained and selected.

Returning to Figure 4A, the method 400 may proceed from block 414 to block 416 in response to no unique values remaining. At block 416, one or more processing operations may be performed based on the obtained final permutation. In some embodiments, processing operations performed at block 416 may include one or more of the processing operations described with respect to processing block 311 of method 300 of Figure 3.

Modifications, additions, or omissions may be made to Figures 4a and 4B without departing from the scope of the disclosure. For example, order of operations may differ. Additionally or alternatively, more or fewer operations than those described may be performed.

Figure 5 is a flowchart of an example method 500 of determining a semantic order of a set of unique values, according to one or more embodiments of the present disclosure. In some embodiments, the pre-processing module 104 and/or the sorting module 108 of Figure 1 may perform one or more operations associated with the method 500. Although illustrated with discrete blocks, the steps and operations associated with one or more of the blocks of the method 500 may be divided into additional blocks, combined into fewer blocks, or eliminated, depending on the particular implementation.

In general, like the method 400, the method 500 may be configured to reduce the amount of computation that may be performed in some instances with respect to determining a semantic order of a set of unique values. In particular, the method 500 may relate to instances in which one or more groups of two or more unique values may each be respectively represented by a more general representative unique value. As detailed below, such instances may allow for the semantic order determination to be performed using a "divide and conquer" approach with respect to the representative unique values and the groups.

The method 500 may include a block 502, at which one or more groups of unique values may be identified from a set of unique values. As indicated above, each group of unique values may respectively include unique values that may be commonly represented by a single representative unique value. For example, unique values "good" and "very good" may be commonly represented by a single representative unique value of "good" and unique values "bad" and "very bad" may be commonly represented by a single representative unique value of "bad".

In some embodiments, the groups of unique values may be identified by identifying whether any of the unique values have common tokens associated therewith. A "token" may include a word and/or a phrase. By way of example, unique values "good" and "very good" may each include the token "good" and based on such a characteristic may be grouped together. Similarly, "bad" and "very bad" may be grouped together as another example.

At block 504, respective representative values may be obtained for each respective identified group of unique values. In some embodiments, the representative values may be based on the common tokens. For example, a representative value of "good" may be obtained for the group of "good" and "very good" based on "good" being the common token between the unique values of the group.

At block 506 sorting operations may be performed using the representative values. For example, the unique values that correspond to a particular representative value may be replaced with a single instance of the representative value in the corresponding set of unique values to obtain a generalized set of unique values. In these or other embodiments, the sorting operations 303 of the method 300 of Figure 3 may be applied to the generalized set of unique values. In these or other embodiments, the sorting operations may include sorting the permutations of the generalized set of unique values according to respective overall permutation probabilities determined for the respective permutations of the generalized set of unique values. In these or other embodiments, a particular permutation of the generalized set of unique values may be selected based on the sorting (e.g., the particular permutation with the highest permutation probability may be selected).

For instance, the set of unique values may include the following unique values: {normal, very bad, very good, bad, good}. Additionally, based on the operations of blocks 502 and 504, "good" and "very good" may be grouped together and assigned a representative value of "good". Similarly, "bad" and "very bad" may be grouped together and assigned a representative value of "bad". At block 506, "good" and "very good" may be replaced with a single instance of "good" in the set of unique values and "bad" and "very bad" may be replaced with a single instance of "bad" in the set of unique values. A generalized set of unique values may accordingly be obtained and may be as follows: {normal, bad, good}. The sorting operations may then be performed with respect to the generalized set of unique values of {normal, bad, good} to determine overall permutation probabilities for the different permutations of the generalized set of unique values. In these or other embodiments, a generalized permutation of <good, normal, bad> may have the highest overall permutation probability and may accordingly be selected.

At block 508, the sorting operations may be performed with respect to each group of unique values that may be identified at block 502. In these or other embodiments, the sorting operations may include identifying a particular group permutation of each group. The identified group permutations may respectively indicate the semantic order of the unique values in each respective group with respect to the other unique values of the corresponding group.

For example, the sorting operations may be respectively performed with respect to the groups {good, very good} and {bad, very bad}. In these or other embodiments, the permutation <very good, good> may be selected and may indicate the semantic order of the corresponding group. Additionally or alternatively, the permutation <bad, very bad> may be selected and may indicate the semantic order of the corresponding group.

At block 510, an overall permutation may be obtained based on the sorting operations performed with respect to blocks 506 and 508. For example, the representative values of the group permutations in the generalized permutation obtained at block 506 may be replaced with the selected group permutations that may be obtained at block 508.

For example, the generalized permutation <good, normal, bad> may be obtained at block 506 in which "good" and "bad" are representative values of the groups {good, very good} and {very bad, bad} respectively. Further, the group permutations <very good, good> and <bad, very bad> may be obtained at block 508. As such, at block 510, "good" in the generalized permutation may be replaced with "very good, good" and "bad" in the general permutation may be replaced with "bad, very bad" to obtain an overall permutation of <very good, good, normal, bad, very bad>.

Additionally or alternatively, at block 510, one or more processing operations may be performed based on the obtained overall permutation. In some embodiments, processing operations performed at block 510 may include one or more of the processing operations described with respect to processing block 311 of method 300 of Figure 3.

Modifications, additions, or omissions may be made to method 500 without departing from the scope of the disclosure. For example, order of operations may differ. Additionally or alternatively, more or fewer operations than those described may be performed.

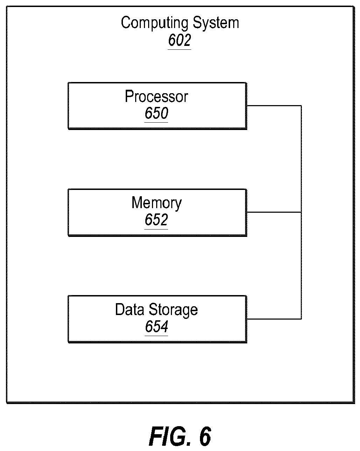

Figure 6 illustrates a block diagram of an example computing system 602, according to at least one embodiment of the present disclosure. The computing system 602 may be configured to implement or direct one or more suitable operations described in the present disclosure. The computing system 602 may include a processor 650, a memory 652, and a data storage 654. The processor 650, the memory 652, and the data storage 654 may be communicatively coupled.

In general, the processor 650 may include any suitable computer, computing entity, or processing device including various computer hardware or software modules and may be configured to execute instructions stored on any applicable computer-readable storage media. For example, the processor 650 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in Figure 6, the processor 650 may include any number of processors configured to, individually or collectively, perform or direct performance of any number of operations described in the present disclosure. Additionally, one or more of the processors may be present on one or more different electronic devices, such as different servers.

In some embodiments, the processor 650 may be configured to interpret and/or execute program instructions and/or process data stored in the memory 652, the data storage 654, or the memory 652 and the data storage 654. In some embodiments, the processor 650 may fetch program instructions from the data storage 654 and load the program instructions in the memory 652. After the program instructions are loaded into memory 652, the processor 650 may execute the program instructions. By way of example, the pre-processing module 104 and/or the sorting module 108 of Figure 1 may be encoded as instructions stored in the data storage 654 and may be executed by the processor 650 to execute the operations described therewith.

The memory 652 and the data storage 654 may include computer-readable storage media for carrying or having computer-executable instructions or data structures stored thereon. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other non-transitory storage medium which may be used to store particular program code in the form of computer-executable instructions or data structures and which may be accessed by a general-purpose or special-purpose computer. In these and other embodiments, the term "non-transitory" as explained in the present disclosure should be construed to exclude only those types of transitory media that were found to fall outside the scope of patentable subject matter in the Federal Circuit decision of *In re Nuijten,* 500 F.3d 1346 (Fed. Cir. 2007).

Combinations of the above may also be included within the scope of computer-readable storage media. Computer-executable instructions may include, for example, instructions and data configured to cause the processor 650 to perform a certain operation or group of operations.

Modifications, additions, or omissions may be made to the computing system 602 without departing from the scope of the present disclosure. For example, in some embodiments, the computing system 602 may include any number of other components that may not be explicitly illustrated or described.

Terms used in the present disclosure and especially in the appended claims (e.g., bodies of the appended claims) are generally intended as "open terms" (e.g., the term "including" should be interpreted as "including, but not limited to.").

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is expressly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase preceding two or more alternative terms, whether in the description, claims, or drawings, should be understood to contemplate the possibilities of including one of the terms, either of the terms, or both of the terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

**Claims**

1. A method comprising:

   obtaining a dataset that includes a plurality of unique values;
   obtaining a plurality of permutations with respect to the plurality of unique values, each permutation including a unique sequence of two or more of the unique values;
   for each respective permutation of the plurality of permutations:

   generating a plurality of masked versions of the respective permutation, each respective masked version of the plurality of masked versions masking a different unique value of the respective permutation;
   providing each masked version to a masked language model (MLM);
   obtaining, from the MLM, a plurality of masked value probabilities, each respective masked value probability of the plurality of masked value probabilities corresponding to a different masked version and indicating a probability associated with the masked unique value with respect to the respective permutation; and
   obtaining a respective overall permutation probability for the respective permutation based on the plurality of masked value probabilities determined with respect to the plurality of masked versions of the respective permutation;

   selecting a particular permutation from the plurality of permutations based on a comparison between the respective overall permutation probabilities of the plurality of permutations;
   determining a semantic order of the unique values of the plurality of unique values based on the particular permutation in which the semantic order is related to respective meanings of the unique values;
   assigning an ordinal value to each of one or more of the unique values based on the semantic order; and
   encoding the dataset with the ordinal values as assigned to each unique value.

2. The method of claim 1, further comprising processing the encoded dataset based on the ordinal values encoded therein.

3. The method of claim 1, wherein:

   each respective permutation of the plurality of permutations does not include a particular unique value of the plurality of unique values; and
   wherein the method further comprises:

   obtaining a plurality of additional permutations based on the selected particular permutation and based on the particular unique value in which the particular unique value is added to the selected particular permutation to generate each respective additional permutation of the plurality of permutations and in which a position of the particular unique value differs in each respective additional permutation;
   masking the particular unique value in each respective additional permutation to generate a plurality of masked additional permutations;
   providing each masked additional permutation to the MLM;
   obtaining, from the MLM, a plurality of additional permutation probabilities, each respective additional permutation probability of the plurality of additional permutation probabilities corresponding to a different masked additional permutation and indicating a probability associated with the particular unique value with respect to the corresponding additional permutation;
   selecting a particular additional permutation from the plurality of additional permutations based on a comparison between the respective additional permutation probabilities of the plurality of additional masked value probabilities; and
   updating the semantic order of the unique values based on the particular additional permutation.

4. The method of claim 1, further comprising recommending further review of the unique values based on the comparison between the respective overall permutation probabilities.

**5.** The method of claim 1, further comprising:

replacing two or more particular unique values with a single representative value based on each of the two or more particular unique values including a common token;

including the representative value in the plurality of permutations; and

determining a position in the semantic order of the two or more particular unique values with respect to other unique values based on a position of the representative value in the selected particular permutation.

**6.** The method of claim 5, further comprising:

obtaining a plurality of additional permutations with respect to the two or more particular unique values;

for each respective additional permutation of the plurality of additional permutations:

generating a plurality of masked additional permutation versions of the respective additional permutation, each respective masked additional permutation version of the plurality of masked additional permutation versions masking a different particular unique value of the respective additional permutation;

providing each masked additional permutation version to the MLM;

obtaining, from the MLM, a plurality of additional masked value probabilities, each respective additional masked value probability of the plurality of additional masked value probabilities corresponding to a different masked additional permutation version and indicating a probability associated with the masked particular unique value with respect to the respective additional permutation; and

obtaining a respective overall additional permutation probability for the respective additional permutation based on the plurality of additional masked value probabilities determined with respect to the plurality of masked additional permutation versions of the respective additional permutation;

selecting a particular additional permutation from the plurality of additional permutations based on a comparison between the respective overall additional permutation probabilities of the plurality of additional permutations; and

determining a position in the semantic order of the two or more particular unique values with respect to each other based on the selected particular additional permutation.

**7.** One or more non-transitory computer-readable storage media configured to store instructions that, in response to being executed, cause a system to perform operations, the operations comprising:

obtaining a dataset that includes a plurality of unique values;

obtaining a plurality of permutations with respect to the plurality of unique values, each permutation including a unique sequence of two or more of the unique values;

for each respective permutation of the plurality of permutations, obtaining a respective overall permutation probability for the respective permutation based on a plurality of masked value probabilities determined by a masked language model (MLM) in which each masked value probability is determined with respect to a respective masked version of a plurality of masked versions of the respective permutation;

selecting a particular permutation from the plurality of permutations based on a comparison between the respective overall permutation probabilities of the plurality of permutations; and

determining a semantic order of the unique values of the plurality of unique values based on the particular permutation in which the semantic order is related to respective meanings of the unique values.

**8.** The one or more non-transitory computer-readable storage media of claim 7, wherein the operations further comprise:

assigning an ordinal value to each of one or more of the unique values based on the semantic order; and

encoding the dataset with the ordinal values as assigned to each unique value.

**9.** The one or more non-transitory computer-readable storage media of claim 7, wherein obtaining the respective overall permutation probability of the respective permutation includes:

generating the plurality of masked versions of the respective permutation, each respective masked version of the plurality of masked versions masking a different unique value of the respective permutation;

providing each masked version to the MLM; and

obtaining, from the MLM, the plurality of masked value probabilities, each respective masked value probability of the plurality of masked value probabilities corresponding to a different masked version and indicating a probability associated with the masked unique value with respect to the respective permutation.

10. The one or more non-transitory computer-readable storage media of claim 7, wherein:

each respective permutation of the plurality of permutations does not include a particular unique value of the plurality of unique values; and
wherein the operations further comprise:

obtaining a plurality of additional permutations based on the selected particular permutation and based on the particular unique value in which the particular unique value is added to the selected particular permutation to generate each respective additional permutation of the plurality of permutations and in which a position of the particular unique value differs in each respective additional permutation;
masking the particular unique value in each respective additional permutation to generate a plurality of masked additional permutations;
providing each masked additional permutation to the MLM;
obtaining, from the MLM, a plurality of additional permutation probabilities, each respective additional permutation probability of the plurality of additional permutation probabilities corresponding to a different masked additional permutation and indicating a probability associated with the particular unique value with respect to the corresponding additional permutation;
selecting a particular additional permutation from the plurality of additional permutations based on a comparison between the respective additional permutation probabilities of the plurality of additional masked value probabilities; and
updating the semantic order of the unique values based on the particular additional permutation.

11. The one or more non-transitory computer-readable storage media of claim 7, the operations further comprising recommending further review of the unique values based on the comparison between the respective overall permutation probabilities.

12. The one or more non-transitory computer-readable storage media of claim 7, the operations further comprising:

replacing two or more particular unique values with a single representative value based on each of the two or more particular unique values including a common token;
including the representative value in the plurality of permutations; and
determining a position in the semantic order of the two or more particular unique values with respect to other unique values based on a position of the representative value in the selected particular permutation.

13. The one or more non-transitory computer-readable storage media of claim 12, the operations further comprising:

obtaining a plurality of additional permutations with respect to the two or more particular unique values;
for each respective additional permutation of the plurality of additional permutations:

generating a plurality of masked additional permutation versions of the respective additional permutation, each respective masked additional permutation version of the plurality of masked additional permutation versions masking a different particular unique value of the respective additional permutation;
providing each masked additional permutation version to the MLM;
obtaining, from the MLM, a plurality of additional masked value probabilities, each respective additional masked value probability of the plurality of additional masked value probabilities corresponding to a different masked additional permutation version and indicating a probability associated with the masked particular unique value with respect to the respective additional permutation; and
obtaining a respective overall additional permutation probability for the respective additional permutation based on the plurality of additional masked value probabilities determined with respect to the plurality of masked additional permutation versions of the respective additional permutation;

selecting a particular additional permutation from the plurality of additional permutations based on a comparison between the respective overall additional permutation probabilities of the plurality of additional permutations; and
determining a position in the semantic order of the two or more particular unique values with respect to each other based on the selected particular additional permutation.

**14.** A system comprising:

one or more processors; and
one or more non-transitory computer-readable storage media configured to store instructions that, in response to being executed by the one or more processors, cause the system to perform operations, the operations comprising:

obtaining a dataset that includes a plurality of unique values;
obtaining a plurality of permutations with respect to the plurality of unique values, each permutation including a unique sequence of two or more of the unique values;
for each respective permutation of the plurality of permutations, obtaining a respective overall permutation probability for the respective permutation based on a plurality of masked value probabilities determined by a masked language model (MLM) in which each masked value probability is determined with respect to a respective masked version of a plurality of masked versions of the respective permutation;
selecting a particular permutation from the plurality of permutations based on a comparison between the respective overall permutation probabilities of the plurality of permutations; and
determining a semantic order of the unique values of the plurality of unique values based on the particular permutation in which the semantic order is related to respective meanings of the unique values.

**15.** The system of claim 14, wherein the operations further comprise:

assigning an ordinal value to each of one or more of the unique values based on the semantic order; and
encoding the dataset with the ordinal values as assigned to each unique value.

**16.** The system of claim 14, wherein obtaining the respective overall permutation probability of the respective permutation includes:

generating the plurality of masked versions of the respective permutation, each respective masked version of the plurality of masked versions masking a different unique value of the respective permutation;
providing each masked version to the MLM; and
obtaining, from the MLM, the plurality of masked value probabilities, each respective masked value probability of the plurality of masked value probabilities corresponding to a different masked version and indicating a probability associated with the masked unique value with respect to the respective permutation.

**17.** The system of claim 14, wherein:

each respective permutation of the plurality of permutations does not include a particular unique value of the plurality of unique values; and
wherein the operations further comprise:

obtaining a plurality of additional permutations based on the selected particular permutation and based on the particular unique value in which the particular unique value is added to the selected particular permutation to generate each respective additional permutation of the plurality of permutations and in which a position of the particular unique value differs in each respective additional permutation;
masking the particular unique value in each respective additional permutation to generate a plurality of masked additional permutations;
providing each masked additional permutation to the MLM;
obtaining, from the MLM, a plurality of additional permutation probabilities, each respective additional permutation probability of the plurality of additional permutation probabilities corresponding to a different masked additional permutation and indicating a probability associated with the particular unique value with respect to the corresponding additional permutation;
selecting a particular additional permutation from the plurality of additional permutations based on a comparison between the respective additional permutation probabilities of the plurality of additional masked value probabilities; and
updating the semantic order of the unique values based on the particular additional permutation.

**18.** The system of claim 14, the operations further comprising recommending further review of the unique values based on the comparison between the respective overall permutation probabilities.

**19.** The system of claim 14, the operations further comprising:

replacing two or more particular unique values with a single representative value based on each of the two or more particular unique values including a common token;
including the representative value in the plurality of permutations; and
determining a position in the semantic order of the two or more particular unique values with respect to other unique values based on a position of the representative value in the selected particular permutation.

**20.** The system of claim 14, the operations further comprising:

obtaining a plurality of additional permutations with respect to the two or more particular unique values;
for each respective additional permutation of the plurality of additional permutations:

generating a plurality of masked additional permutation versions of the respective additional permutation, each respective masked additional permutation version of the plurality of masked additional permutation versions masking a different particular unique value of the respective additional permutation;
providing each masked additional permutation version to the MLM;
obtaining, from the MLM, a plurality of additional masked value probabilities, each respective additional masked value probability of the plurality of additional masked value probabilities corresponding to a different masked additional permutation version and indicating a probability associated with the masked particular unique value with respect to the respective additional permutation; and
obtaining a respective overall additional permutation probability for the respective additional permutation based on the plurality of additional masked value probabilities determined with respect to the plurality of masked additional permutation versions of the respective additional permutation;

selecting a particular additional permutation from the plurality of additional permutations based on a comparison between the respective overall additional permutation probabilities of the plurality of additional permutations; and
determining a position in the semantic order of the two or more particular unique values with respect to each other based on the selected particular additional permutation.

| Dataset 102 | → | Pre-Processing Module 104 | → | Unique Value Set(s) 106 | → | Sorting Module 108 | → | Semantic Order 110 |

100

*FIG. 1*

_200_

| Select Category |
|---|

_202_

| Obtain Strings |
|---|

_204_

| Identify Unique Values |
|---|

_206_

**FIG. 2**

300

| Identify Unique Values | 302 |

303

| Generate Permutations | 304 |

| Obtain Masked Versions Of The Permutations | 306 |

| Obtain Masked Value Probabilities | 308 |

| Obtain Overall Permutation Probabilities | 310 |

311

| Select A Particular Permutation | 312 |

| Determine Semantic Order | 314 |

| Assign Ordinal Values | 316 |

| Encode Dataset With Ordinal Values | 318 |

| Recommend Unique Values For Further Review | 320 |

| Determine Ordinal Distance | 322 |

*FIG. 3*

_400_

| Obtain Subset Of Unique Values | _402_ |

↓

| Perform Sorting Operations For Subset | _404_ |

↓

| Select A Particular Subset Permutation | _406_ |

↓

| Obtain Additional Unique Value(s) | _408_ |

↓

| Perform Sorting Operations With Respect To Additional Unique Value(s) | _410_ |

↓

| Select Additional Permutation | _412_ |

↓

Yes ← Remaining Unique Values? _414_

No ↓

| Perform Processing | _416_ |

**FIG. 4A**

EP 4 235 487 A1

{May, Feb, Mar, Aug, Apr, Jan, Nov, Jul, Sep, Oct, Dec, Jun} ← 452

450

{Feb, Apr, Jan, Sep, Jun} ← 454

464 → <Jan, Feb, Mar, Apr, May, Jun, Jul, Aug, Sep, Oct, Nov, Dec>

456
<Jan, Feb, Apr, Jun, Sep>     0.95179
Jan, Feb, Aug, Apr, <Sep>     0.895466
<Jan, Feb, Aug, Jun, Sep>     0.867498
<Jan, Feb, Aug, Apr, Dec>     0.854422
<Jan, Feb, Aug, Dec, Sep>     0.797882

• • •

460
<Oct, Jan, Feb, Apr, Jun, Sep>,
<Jan, Oct, Feb, Apr, Jun, Sep>,
458 → {Oct, May, Jul, Aug, Dec, Mar, Nov} —Add Oct→ <Jan, Feb, Oct, Apr, Jun, Sep>, ——→ <Jan, Feb, Apr, Jun, Sep, Oct> ← 462
<Jan, Feb, Apr, Oct, Jun, Sep>,
<Jan, Feb, Apr, Jun, Oct, Sep>,
<Jan, Feb, Apr, Jun, Sep, Oct>

*FIG. 4B*

*500*

| Identify Group(s) Of Unique Values | *502* |

↓

| Obtain Representative Value(s) | *504* |

↓

| Perform Sorting Operations<br>Using Representative Value(s) | *506* |

↓

| Perform Sorting Operations For<br>Group(s) of Unique Values | *508* |

↓

| Obtain Overall Permutation | *510* |

*FIG. 5*

Computing System
*602*

Processor
*650*

Memory
*652*

Data Storage
*654*

**FIG. 6**

Europäisches
Patentamt

European
Patent Office

Office européen
des brevets

# EUROPEAN SEARCH REPORT

**Application Number**

EP 22 19 9081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Nishida Noriki ET AL: "Word Ordering as Unsupervised Learning Towards Syntactically Plausible Word Representations", Proceedings of the The 8th International Joint Conference on Natural Language Processing, 1 January 2017 (2017-01-01), pages 70-79, XP093054048, Retrieved from the Internet: URL:https://aclanthology.org/I17-1008.pdf [retrieved on 2023-06-13] * abstract, section 1 and 2 * | 1-20 | INV. G06F40/247 G06F40/30 G06N3/00 |
| X | Jurewicz ET AL: "Set-to-Sequence Methods in Machine Learning: a Review", Journal of Artificial Intelligence Research (JAIR), vol 71, 1 January 2021 (2021-01-01), XP093054139, Retrieved from the Internet: URL:https://www.jair.org/index.php/jair/article/view/12839 [retrieved on 2023-06-13] * section 1, 2 and 3 * | 1-20 | |
| | | | **TECHNICAL FIELDS SEARCHED (IPC)** |
| | | | G06F G06N |
| T | LAUSSER LUDWIG ET AL: "Detecting Ordinal Subcascades", NEURAL PROCESSING LETTERS, vol. 52, no. 3, 1 December 2020 (2020-12-01), pages 2583-2605, XP093054020, US ISSN: 1370-4621, DOI: 10.1007/s11063-020-10362-0 Retrieved from the Internet: URL:https://link.springer.com/content/pdf/10.1007/s11063-020-10362-0.pdf?pdf=button> * the whole document * | 1-20 | |

-/--

The present search report has been drawn up for all claims

| Place of search | Date of completion of the search | Examiner |
|---|---|---|
| Berlin | 13 June 2023 | Alt, Susanne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................

& : member of the same patent family, corresponding document

EPO FORM 1503 03.82 (P04C01)

## EUROPEAN SEARCH REPORT

Europäisches Patentamt
European Patent Office
Office européen des brevets

Application Number

EP 22 19 9081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | Bahrami Mehdi ET AL: "BERT-Sort: A Zero-shot MLM Semantic Encoder on Ordinal Features for AutoML", <br> , <br> 27 July 2022 (2022-07-27), XP093054002, <br> Retrieved from the Internet: <br> URL:https://proceedings.mlr.press/v188/bahrami22a/bahrami22a.pdf <br> [retrieved on 2023-06-13] <br> * the whole document * <br> ----- | 1-20 | |
| X,P | JUREWICZ MATEUSZ ET AL: "Set Interdependence Transformer: Set-to-Sequence Neural Networks for Permutation Learning and Structure Prediction", <br> PROCEEDINGS OF THE THIRTY-FIRST INTERNATIONAL JOINT CONFERENCE ON ARTIFICIAL INTELLIGENCE, <br> 1 July 2022 (2022-07-01), pages 3128-3134, XP093054040, <br> California <br> DOI: 10.24963/ijcai.2022/434 <br> ISBN: 978-1-956792-00-3 <br> Retrieved from the Internet: <br> URL:https://www.ijcai.org/proceedings/2022/0434.pdf> <br> * section 1,2 and 3 * <br> ----- | 1-20 | TECHNICAL FIELDS SEARCHED (IPC) |

The present search report has been drawn up for all claims

| Place of search | Date of completion of the search | Examiner |
|---|---|---|
| Berlin | 13 June 2023 | Alt, Susanne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)